# EUROPEAN PATENT APPLICATION

(11) **EP 4 513 462 A1**
(43) Date of publication of application: **26.02.2025**
(21) Application number: 23192869.8
(22) Date of filing: 23.08.2023

(54) **METHOD FOR VEHICLE COLLISION AVOIDANCE**

(71) Applicant: Magna Electronics Sweden AB, 447 37 Vårgårda (SE)
(72) Inventor: THALYA, Prateek, 447 37 Vårgårda (SE); PALSSON, Carl-Johan, 447 37 Vårgårda (SE)
(74) Representative: Reichert & Lindner Partnerschaft Patentanwälte

(57) **Abstract**

Information on an environment of a vehicle (1) is gathered to detect and monitor entities (2, 3, 4, 5) in the environment. A risk level of collision between each detected entity (2, 3, 4, 5) and the vehicle (1) is assessed. It is determined which entities (4, 5) a driver of the vehicle (1) has looked at. The risk level for entities (4, 5) the driver has looked at is reduced. A risk level above a pre-defined threshold triggers a risk reducing action.

## Description

The invention relates to a method for reducing the risk of a vehicle colliding with an entity in an environment of the vehicle, as well as to a vehicle implementing such a method.

Traffic on roads increases, involving a wide variety of entities, e.g., cars, trucks, motorbikes, bikes, electroscooters, pedestrians. A driver of a vehicle has to pay increasing attention to avoid accidents, more precisely collisions with other entities in an environment of the vehicle.

While advanced driver assistance systems (ADAS) are already known to include functionality to support the driver, it is nonetheless desirable to improve the identification of situations which are precursors to collision in order to increase the chances of avoiding an accident. At the same time, false positives in the identification of such situations should be avoided. A driver experiencing many alerts of such collision precursors which turn out to be false positives will tend to ignore such alerts, which likely leads to the driver ignoring a justified alert and so potentially to a collision. Also, such false alerts may distract the driver unnecessarily from situations requiring the driver's attention.

It is an object of the invention to provide a method which addresses these problems.

This object is achieved by a method according to claim 1. Claim 9 relates to a corresponding vehicle. The dependent claims relate to advantageous embodiments.

The method according to the invention is intended to be implemented in a vehicle.

This can be achieved by a suitably programmed data processing system on board of the vehicle, which is in communication with suitable devices like sensors. The method includes steps as follows:
Information on an environment of the vehicle is gathered to detect and subsequently monitor entities in the environment of the vehicle. The entities include other vehicles, pedestrians, and objects like containers, boulders, etc. which for some reason or other ended up close to the vehicle. A driver of the vehicle is monitored to determine which of the detected entities the driver has looked at. For example, this can be achieved by determining the direction the driver is looking at and correlating this with information on the position of detected entities relative to the vehicle, so it can be derived which of the detected entities are within a field of view of the driver. Here the field of view may be defined to be narrower than the physiological field of view, based on the assumption that an entity at the edge of the physiological field of view may not receive sufficient attention from the driver; furthermore, not all drivers have exactly the same field of view.

For each detected entity, a risk level for a collision between the respective entity and the vehicle is assessed. A possible approach here is to consider data, from the monitoring of the detected entities, on current position and current motion of the respective entity relative to the vehicle, and to derive from a predicted trajectory of the entity whether a collision is to be expected. If it is found that the assessed risk level is above a pre-defined threshold, a risk avoiding action is triggered.

The detection and monitoring of entities in the environment of the vehicle can be achieved by known means. The monitoring of the driver to determine a direction the driver is looking at can be achieved by a known Driver Monitoring System (DMS), of which several are commercially available. The risk level for a collision between a specific entity and the vehicle can, for example, be expressed as a probability for a collision between the entity and the vehicle, based on a predicted trajectory of the entity relative to the vehicle. Determining which entities the driver has looked at may involve methods as described in European patent EP 3 828 755 B1.

According to the invention, the risk level assessed as described is reduced for entities the driver has looked at, before the assessed risk level is compared with the pre-defined threshold. An entity the driver has looked at is assumed to have the driver's attention, and therefore is considered less likely to require an action triggered by the method.

This method leads to a decreased number of actions, like alerts, triggered by the method, in reaction to detected entities the driver has looked at. Thus, the number of unnecessary actions, like alerts, can be reduced.

Assessing the risk level for a collision with an entity may involve geometric features of that entity, like size and shape, and corresponding geometric features of the vehicle. If such geometric features are taken into consideration, it can be determined more reliably how far from the vehicle a predicted trajectory has to remain for a collision not to occur. Assessing the risk level for a collision with an entity may involve a classification of the entity according to type of entity. For example, predicting the trajectory, relative to the vehicle, of a boulder on the road involves less uncertainty than predicting the trajectory, relative to the vehicle, of a pedestrian, who may unpredictably change his movement relative to the road.

In an embodiment, the risk level for an entity the driver has looked at is reduced if the driver has looked at the respective entity for at least a pre-defined timespan (e.g., 500 ms). The assumption here is that in order for the driver to really become aware of an entity, the driver needs to look at the entity for at least a certain amount of time. It may be that for the driver to look at the respective entity for a minimum amount of time is a requirement for any reduction of that entity's risk level. It may also be that looking at a detected entity for a minimum amount of time leads to an additional reduction of the risk level.

It is conceivable that an entity the driver has looked at, but subsequently not has had eye contact with for a pre-defined amount of time, loses its status as a "looked at"-entity.

In an embodiment which may, but need not, be combined with the previous one the risk level for an entity the driver has looked at is reduced if the driver has taken steps to avoid a collision with the respective entity. Such steps may include releasing the throttle, activating brakes, or turning the steering wheel such as to move the vehicle away from the entity. Such steps can be detected by monitoring systems on board of the vehicle. Such steps may be a requirement for a reduction of the risk level to occur at all or may be the cause of an additional reduction of the risk level.

In a general embodiment the triggered risk reducing action includes at least one of the following: an autonomous emergency braking, an acoustic alert, an optical alert. An optical alert may for example be a flashing warning light or an indication appearing in a head-up display of the vehicle. The triggered action may be selected based on the risk level. For example, if the assessed risk level for an entity is above the threshold for triggering an action at all, but below a second, higher threshold, an alert may be triggered. If the risk level is, or rises, above the second threshold, autonomous emergency braking may be triggered.

In a general embodiment the gathering of information on the environment of the vehicle includes receiving data from one or more sensors for monitoring the environment of the vehicle. In this way the method according to the invention can be provided with necessary information on position and movement of entities in the environment by means on board of the vehicle. Such sensors may include at least one of the following: a camera, a radar system, a lidar system. Such sensors may also gather information on shape and size of an entity. Information on size and shape of an entity may also be used in classification of the entity.

In a general embodiment the gathering of information on the environment of the vehicle includes receiving data from a vehicle-to-everything communication system. This may include other vehicles communicating their position, state of motion, intended maneuvers to the vehicle implementing the method. In a specific variant of this embodiment, a communication rate of the vehicle-to-everything communication system with entities the driver has not looked at is increased. The reasoning here is that entities the driver has not looked at can be assumed not to have the driver's attention and therefore require additional attention from the part of the method, using information on those entities received with increased time resolution for the method to be able to timely assess the risk level of such an entity. Also, in situations where limited bandwidth of the vehicle-to-everything communication is an issue, it is preferable to dedicate available bandwidth to those entities which are assumed not to have the driver's attention, i.e., those entities the driver has not looked at.

A vehicle according to the invention includes one or more sensors for monitoring an environment of the vehicle and a driver monitoring system configured to determine a direction a driver of the vehicle is looking at. The vehicle furthermore includes a data processing system configured to perform the method according to the invention. Performing the method involves communication between the data processing system and the sensors as well as the driver monitoring system. The vehicle may also include a vehicle-to-everything communication system, which then also is in communication with the data processing system for purposes of the method.

Below, the invention and its advantages are described with reference to the accompanying figures.
- Figure 1: shows a street scenario with a vehicle according to the invention and several entities.
- Figure 2: illustrates an example of the interaction between subsystems of a vehicle according to the invention for implementing the method according to the invention.
- Figure 3: illustrates a further example of the interaction between subsystems of a vehicle according to the invention for implementing the method according to the invention.

The figures only relate to examples of how the invention can be implemented; therefore, the figures are not to be taken as a limitation of the invention to the specific examples shown.

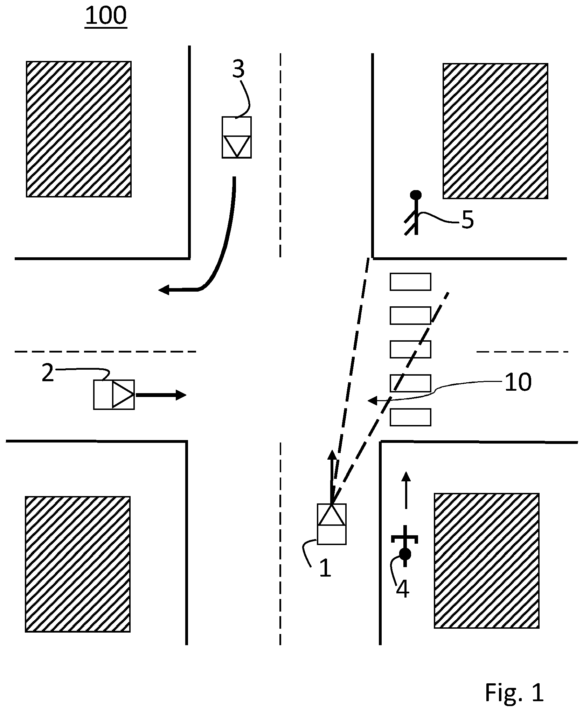

**Fig. 1** shows a street scenario 100 with a vehicle 1 according to the invention and several entities in the environment of the vehicle 1, more precisely cars 2 and 3, a cyclist 4, and a pedestrian 5. Vehicle 1 is currently travelling in the direction of the arrow shown at the vehicle 1, but the driver of vehicle 1 intends to make a right turn. Presently, pedestrian 5 is in the driver's field of view 10 as determined by a driver monitoring system; previously, the driver also has looked at cyclist 4. The vehicle 1 is implementing the method according to the invention, and the method assumes that the driver has duly noticed cyclist 4 and pedestrian 5. Therefore, a risk level for a collision between the vehicle 1 and the cyclist 4 as well as for a collision between the vehicle 1 and the pedestrian 5 is reduced before the risk levels are compared with a pre-defined threshold for triggering a risk reducing action, like an alert or an autonomous emergency braking. On the other hand, the driver of vehicle 1 has had eye-contact neither with car 2 nor with car 3. The driver of car 2 intends to move straight on, while the driver of car 3 intends a right turn, as indicated. The method according to the invention is monitoring cars 2 and 3, for example with one or more cameras and a radar system. Additionally, via vehicle-to-everything communication systems implemented in vehicle 1 and cars 2, 3, vehicle 1 receives information on position and speed of cars 2 and 3. The information gathered by monitoring cars 2 and 3, as well as the information obtained via vehicle-to-everything communication is processed to assess a risk level of collision between vehicle 1 and cars 2 and 3, respectively. If the risk level is above the pre-defined threshold, a risk reducing action is triggered. As the driver of vehicle 1 has not looked at cars 2 and 3, the risk level is not reduced, contrary to the case of pedestrian 5 and cyclist 4. Furthermore, the communication between vehicle 1 and cars 2, 3 via the vehicle-to-everything communication systems may have its rate of communication increased to provide respective information at higher time resolution. The higher time resolution leads to better assessment of the risk level as well as to a timelier triggering of risk reducing actions should this become necessary.

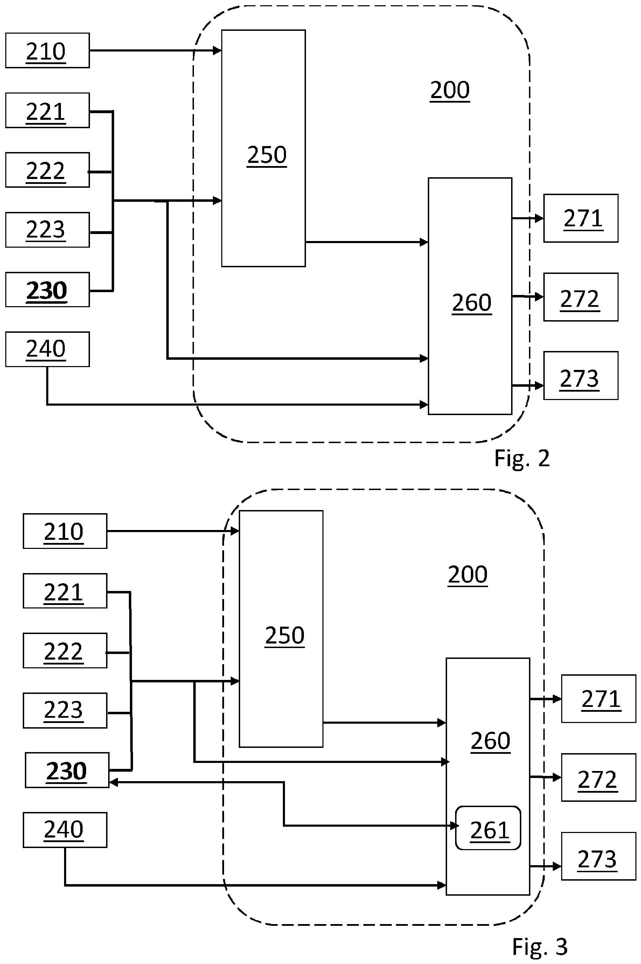

**Fig. 2** illustrates an example of the interaction between subsystems of a vehicle according to the invention for implementing the method according to the invention. The vehicle includes a driver monitoring system 210, one or more cameras 221, a radar system 222, a lidar system 223, and a vehicle-to-everything communication system 230. Further, various sensors, reporting elements and monitoring elements, dubbed here collectively a vehicle information system 240, are provided. The driver monitoring system 210 gathers information on the direction of the gaze of the driver and on the origin of the gaze, i.e., the position of the head of the driver in the vehicle, so that a field of view of the driver can be derived. Information on origin and direction of the gaze is provided to an objects-looked-at system (OLA system) 250, which derives a field of view of the driver; alternatively, the field of view may be derived by the driver monitoring system 210 and the result provided to the objects-looked-at system 250. The one or more cameras 221, radar system 222 and lidar system 223 gather information on entities in an environment of the vehicle and provide this information to the objects-looked-at system 250. Vehicle-to-everything communication system 230 also obtains information on entities in an environment of the vehicle and provides this information to the objects-looked-at system 250. The information on entities in the environment of the vehicle includes information on position, size, shape, orientation, classification, and motion of the entities. Apart from the objects-looked-at system 250, this information is also provided to an advanced driver assistance system 260. The objects-looked-at system 250 and the advanced driver assistance system 260 form part of a data processing system 200 of the vehicle. The information from the vehicle information system 240 includes information on the operation of pedals (e.g., throttle, brakes), operation of the steering wheel, indicators; this information is provided to the advanced driver assistance system 260. The purpose of the objects-looked-at system 250 is to determine which entities the driver has looked at, possibly for how long the driver has looked at the respective entity, and when the last eye-contact with the respective entity occurred. It should be noted that despite the term "objects-looked-at system", this functionality of the system 250 is not limited to objects but covers the wider class of entities described above. The information determined by the objects-looked-at system 250 is provided to the advanced driver assistance system 260. The advanced driver assistance system 260, based on all the information it received, assesses a respective risk level for a collision between the vehicle and the entities detected in the vehicle's environment. A risk level is reduced if the respective entity is considered a "looked-at"-entity (for example, according to the results from the objects-looked-at system 250, the driver has looked at the respective entity for at least a certain amount of time and the last eye contact with said entity has not occurred longer ago than a pre-defined interval of time). If, for an entity in the environment of the vehicle, the resulting risk level is above a pre-defined threshold, the advanced driver assistance system 260 triggers a risk reducing action, for example an autonomous emergency braking 271, an alert 272 (for example, acoustic and I or optical), or some other type 273 of risk reducing action.

**Fig. 3** illustrates a further example of the interaction between subsystems of a vehicle according to the invention for implementing the method according to the invention. The example is largely identical to the example discussed in the context of Fig. 2, which discussion will not be repeated here. In contrast to the example of Fig. 2, in the example shown in Fig. 3 the vehicle-to-everything communication system 230 has a prioritization 261 set by the advanced driver assistance system 260 based on the information provided to the advanced driver assistance system 260, which prioritization implies a higher communication rate of the vehicle-to-everything communication system 230 with those entities the driver has not looked at (provided those entities are capable of such communication).

### List of Reference Signs

- 1: vehicle
- 2: car
- 3: car
- 4: cyclist
- 5: pedestrian
- 10: field of view
- 100: street scenario
- 200: data processing system
- 210: driver monitoring system
- 221: camera
- 222: radar
- 223: lidar
- 230: vehicle-to-everything communication system
- 240: vehicle information system
- 250: objects-looked-at system
- 260: advanced driver assistance system
- 261: prioritization
- 271: autonomous emergency braking
- 272: alert
- 273: other

## Claims

1. Method for implementation in a vehicle (1), the method including the steps:
gathering information on an environment of the vehicle (1) to detect and subsequently monitor entities (2, 3, 4, 5) in the environment of the vehicle (1);
monitoring a driver of the vehicle (1) to determine which of the detected entities (2, 3, 4, 5) the driver has looked at;
assessing, for each detected entity (2, 3, 4, 5), a risk level for a collision between the respective entity (2, 3, 4, 5) and the vehicle (1);
triggering a risk reducing action (271, 272, 273) if a risk level above a pre-defined threshold is found;
**characterized by**
reducing, before comparison with the pre-defined threshold, an assessed risk level for entities (4, 5) the driver has looked at.

2. Method according to claim 1, wherein the risk level for an entity (4, 5) the driver has looked at is reduced if the driver has looked at the respective entity (4, 5) for at least a pre-defined timespan.

3. Method according to claim 1 or claim 2, wherein the risk level for an entity (4, 5) the driver has looked at is reduced if the driver has taken steps to avoid a collision with the respective entity (4, 5).

4. Method according to one of the previous claims, wherein the triggered risk reducing action includes at least one of the following:
autonomous emergency braking (271), acoustic alert (272), optical alert (272).

5. Method according to one of the previous claims wherein the gathering of information on the environment of the vehicle (1) includes receiving data from one or more sensors (221, 222, 223) for monitoring the environment of the vehicle (1).

6. Method according to claim 5, wherein the one or more sensors for monitoring the environment of the vehicle (1) include at least one of the following:
a camera (221), a radar system (222), a lidar system (223).

7. Method according to one of the previous claims, wherein the gathering of information on the environment of the vehicle (1) includes receiving data from a vehicle-to-everything communication system (230).

8. Method according to claim 7, wherein a communication rate of the vehicle-to-everything communication system (230) with an entity (2, 3) the driver has not looked at is increased.

9. Vehicle (1) including
one or more sensors (221, 222, 223) for monitoring an environment of the vehicle (1);
a driver monitoring system (210), configured to determine a direction a driver of the vehicle (1) is looking at;
a data processing system (200) configured to perform the method according to one of the claims 1 to 6.

10. Vehicle (1) according to claim 9, the vehicle (1) including a vehicle-to-everything communication system (230), the data processing system (200) configured to perform the method according to one of the claims 1 to 8.
